# EUROPEAN PATENT APPLICATION

(11) **EP 4 270 565 A1**
(43) Date of publication of application: **01.11.2023**
(21) Application number: 21911518.5
(22) Date of filing: 22.12.2021
(51) Int. Cl.: H01M 10/04, H01M 50/595

(54) **ELECTRODE ASSEMBLY AND SECONDARY BATTERY COMPRISING SAME**

(30) Priority: 24.12.2020 KR 20200183971
(71) Applicant: LG Energy Solution, Ltd., Seoul 07335 (KR)
(72) Inventor: KIM, So Yeon, Daejeon 34122 (KR); KIM, Jang Bae, Daejeon 34122 (KR); KIM, Do Hyeong, Daejeon 34122 (KR); LEE, Kwan Soo, Daejeon 34122 (KR)
(74) Representative: Goddar, Heinz J.
(86) International application number: PCT/KR2021/019599
(87) International publication number: WO 2022/139451

(57) **Abstract**

An electrode assembly, which is provided as a winding type electrode assembly, according to the present invention comprises: a positive electrode comprising a positive electrode active material portion that is an area, on which a positive electrode active material is stacked, and a positive electrode non-coating portion that is an area, on which the positive electrode active material is not stacked, on a positive electrode collector; a positive electrode tab provided on the positive electrode non-coating portion; a negative electrode comprising a negative electrode active material portion that is an area, on which a negative electrode active material is stacked, and a negative electrode non-coating portion that is an area, on which the negative electrode active material is not stacked, on a negative electrode collector; a negative electrode tab provided on the negative electrode non-coating portion; and a separator configured to insulate the positive electrode from the negative electrode, wherein the negative electrode non-coating portion comprises a core-side negative electrode non-coating portion disposed at a core when the positive electrode, the negative electrode, and the separator are wound, the negative electrode tab is disposed on one surface, which is a side of the positive electrode, of both surfaces of the core-side negative electrode non-coating portion, and a protective tape is attached to the other surface of the core-side negative electrode non-coating portion.

## Description

### TECHNICAL FIELD

### CROSS-REFERENCE TO RELATED APPLICATION

The present application claims the benefit of the priority of Korean Patent Application No. 10-2020-0183971, filed on December 24, 2020, which is hereby incorporated by reference in its entirety.

### TECHNICAL FIELD

The present invention relates to an electrode assembly and a secondary battery comprising the same.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Among them, the jelly-roll type electrode assembly is widely used because the jelly-roll type electrode assembly has an advantage is easily manufactured and has high energy density per weight.

However, there is a problem in that a portion of the separator disposed in a core part of the jelly-roll type electrode assembly according to the related art is contracted, and the separator is disconnected by an end of a positive electrode core part to cause ignition. In addition, in the jelly-roll type electrode assembly structure according to the related art, there is a problem in that the core collapse, which is important in lifespan characteristics of the secondary battery, occurs to affect the lifespan.

[Prior Art Document] (Patent Document) Korean Patent Publication No. 10-2016-0010121

### DISCLOSURE OF THE INVENTION

### TECHNICAL PROBLEM

One aspect of the present invention is to provide an electrode assembly that is capable of preventing a separator from being damaged and a secondary battery comprising the same.

### TECHNICAL SOLUTION

An electrode assembly, which is provided as a winding type electrode assembly, according to an embodiment of the present invention comprises: a positive electrode comprising a positive electrode active material portion that is an area, on which a positive electrode active material is stacked, and a positive electrode non-coating portion that is an area, on which the positive electrode active material is not stacked, on a positive electrode collector; a positive electrode tab provided on the positive electrode non-coating portion; a negative electrode comprising a negative electrode active material portion that is an area, on which a negative electrode active material is stacked, and a negative electrode non-coating portion that is an area, on which the negative electrode active material is not stacked, on a negative electrode collector; a negative electrode tab provided on the negative electrode non-coating portion; and a separator configured to insulate the positive electrode from the negative electrode, wherein the negative electrode non-coating portion comprises a core-side negative electrode non-coating portion disposed at a core when the positive electrode, the negative electrode, and the separator are wound, the negative electrode tab is disposed on one surface, which is a side of the positive electrode, of both surfaces of the core-side negative electrode non-coating portion, a protective tape is attached to the other surface of the core-side negative electrode non-coating portion, and the protective tape is attached over the core-side negative electrode non-coating portion and an end of the cores-side negative electrode active material portion.

A secondary battery according to an embodiment of the present invention may comprise the electrode assembly according to an embodiment of the present invention.

### ADVANTAGEOUS EFFECTS

According to the present invention, the negative electrode tab may be disposed on the one surface of the positive electrode-side of the both the surfaces of the core-side negative electrode non-coating portion, and the protective tape may be attached to the other surface of the core-side negative electrode non-coating portion. Here, the protective tape may be attached over the other surface of the core-side negative electrode non-coating portion and the end of the other surface of the core-side negative electrode active material portion to prevent the protective tape from being short-circuited when the separator faced by the core-side end of the positive electrode during the winding is damaged.

### BRIEF DESCRIPTION OF THE DRAWINGS

FIG. 1 is a perspective view of an electrode assembly and a secondary battery comprising the same according to an embodiment of the present invention.
FIG. 2 is a front view illustrating an unfolded state before an electrode assembly is wound according to an embodiment of the present invention.
FIG. 3 is a front view illustrating an unfolded state before an electrode assembly is wound according to another embodiment of the present invention.
FIG. 4 is a graph illustrating results obtained by measuring ignition stability of an electrode assembly according to the related art and an embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Electrode assembly according to an embodiment

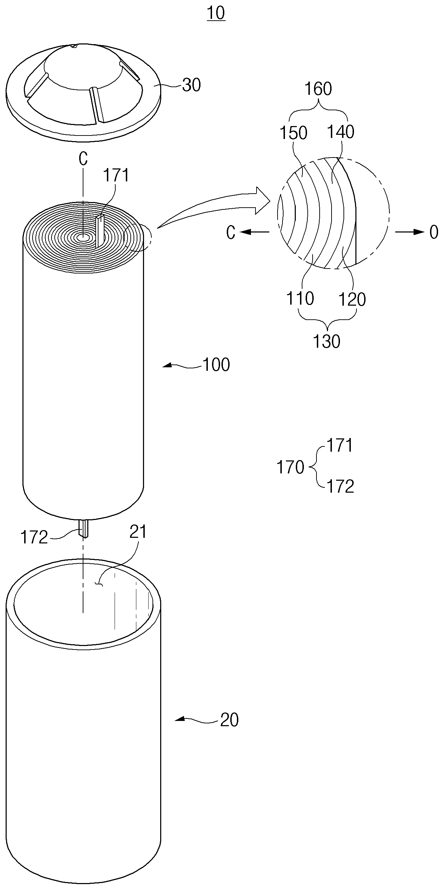

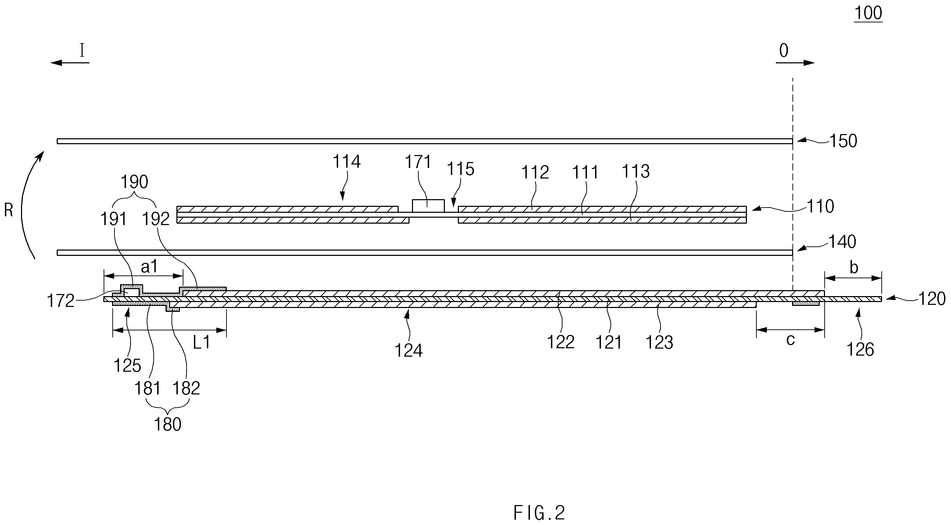

FIG. 1 is a perspective view of an electrode assembly and a secondary battery comprising the same according to an embodiment of the present invention, and FIG. 2 is a front view illustrating an unfolded state before an electrode assembly is wound according to an embodiment of the present invention.

Referring to FIGS. 1 and 2, an electrode assembly 100 according to an embodiment of the present invention is a winding-type electrode assembly 100 and comprises a positive electrode 110 comprising positive electrode active material portions 112 and 113 and a positive electrode non-coating portion 115, a positive electrode tab 171 provided on the positive electrode non-coating portion 115, a negative electrode 120 comprising negative electrode active material portions 122 and 123 and negative electrode non-coating portions 125 and 126, a negative electrode tab 172 provided on each of the negative electrode non-coating portions 125 and 126, and a separator 160 separating the positive electrode 110 from the negative electrode 120.

Hereinafter, an electrode assembly according to an embodiment of the present invention will be described in more detail.

The electrode assembly 100 may be a chargeable and dischargeable power generation element and have a structure in which an electrode 130 and a separator 160 are combined and alternately stacked. Here, the electrode assembly 100 may be formed in a shape in which the electrodes 130 and the separators 160 are alternately combined to be wound. Here, the electrode assembly 100 may be wound in a cylindrical shape wound around a central axis C.

The electrodes 130 may comprise a positive electrode 110 and a negative electrode 120. Also, the separator 160 separates and electrically insulates the positive electrode 110 and the negative electrode 120 from each other.

The positive electrode 110 may comprise a positive electrode collector 111, positive electrode active material portions 112 and 113 that are areas on which a positive electrode active material 114 is stacked on the positive electrode collector 111, and a positive electrode non-coating portion 115 that are areas on which the positive electrode active material is not stacked.

The positive electrode collector 111 may be provided as, for example, foil made of an aluminum material.

The positive electrode active material 114 may comprise lithium cobalt oxide, lithium nickel oxide, lithium iron phosphate, or a compound containing one kind or more of these and mixtures thereof.

The positive electrode non-coating portion 115 may be disposed between both sides of the positive electrode 110.

The negative electrode 120 may comprise a negative electrode collector 121, negative electrode active material portions 122 and 123 that are areas, on which a negative electrode active material is stacked on the negative electrode collector 121, and negative electrode non-coating portions 125 and 126 that are areas on which the negative electrode active material is not stacked.

For example, the negative electrode collector 121 may be foil made of a copper (Cu) or nickel (Ni) material.

The negative electrode active material 124 may comprise, for example, synthetic graphite, lithium a metal, a lithium alloy, carbon, petroleum coke, activated carbon, graphite, a silicon compound, a tin compound, a titanium compound, or an alloy thereof. Here, the negative electrode active material may further comprise, for example, non-graphite-based SiO (silica) or SiC (silicon carbide).

The negative active material portions 122 and 123 may be provided on both surfaces of the negative electrode collector 121, respectively. Here, a length of each of the negative active material portions 122 and 123 provided in the negative electrode collector 121, which is a side of the positive electrode 110, may be greater than that of each of the positive electrode active material portions 112 and 113. Here, for example, the length of the negative electrode active material portion 122 provided on one surface of the negative electrode collector 121, which is a side of the positive electrode 110, is greater than that of the negative electrode active material portion 123 provided on the other surface of the negative electrode collector 121, but the present invention is not necessarily limited thereto.

The negative electrode non-coating portions 125 and 126 may comprise the core-side negative electrode non-coating portion 125 disposed at a core when the positive electrode 110, the negative electrode 120, and the separator 160 are wound.

The core-side negative electrode non-coating portion 125 may be disposed at one side of the negative electrode 120.

Here, the negative electrode 120, the first separator 140, the positive electrode 110, and the second separator 150 may be wound in a clockwise direction from one side.

The negative electrode non-coating portions 125 and 126 may further comprise an outer negative electrode non-coating portion 126 disposed at the other side of the negative electrode 120. That is, the negative electrode non-coating portions 125 and 126 may comprise the core-side negative electrode non-coating portions 125 disposed at a core side I of the electrode assembly 100 and an outer negative electrode non-coating portion 126 disposed at an outer side 0 of the electrode assembly 100 when the electrode assembly 100 is wound.

The negative electrode 120 may be formed to have a length longer than that of the positive electrode 110.

The separator 160 may be made of an insulating material to insulate the positive electrode 110 and the negative electrode 120 from each other.

Also, the separator 160 may be, for example, a multilayered film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

Also, the separator 160 may comprise a first separator 140 and a second separator 150.

Here, the negative electrode 120, the first separator 140, the positive electrode 110, and the second separator 150 may be sequentially stacked from the outermost winding portion.

Each of the first separator 140 and the second separator 150 may be formed to be longer than each of the positive electrode 110 and the negative electrode 120.

An electrode tab 170 is attached to the electrode 130 and is electrically connected to the electrode 130.

The electrode tab 170 may comprise a positive electrode tab 171 attached to the positive electrode 110 and a negative electrode tab 172 attached to the negative electrode 120.

The positive electrode tab 171 may be provided on the positive electrode non-coating portion 115 and may be disposed on one surface in the direction that is directed from the positive electrode 110 to the second separator 150.

The negative electrode tab 172 may be provided on the negative electrode non-coating portions 125 and 126 and may be disposed on one surface of both surfaces of the core-side negative electrode non-coating portion 125, which is a side of the positive electrode 110.

A width of the negative electrode tab 172 may be, for example, 3 mm to 4 mm. Here, more specifically, the width of the negative electrode tab 172 may be, for example, 3.5 mm, but the present invention is not necessarily limited thereto.

The electrode assembly according to an embodiment of the present invention may further comprise protective tapes 180 and 190 attached to the core-side negative electrode non-coating portion 125.

The protective tapes 180 and 190 may be attached over the core-side negative electrode non-coating portion 125 and an end of the core-side negative electrode active material portions 122 and 123.

In addition, each of the protective tapes 180 and 190 may comprise, for example, polyimide (PI) or polyethylene terephthalate (PET) material. Here, each of the protective tapes 180 and 190 may comprise a base material and an adhesive layer applied on one surface of the base material. In this case, the base material may be made of a PI or PET material.

Furthermore, the protective tapes 180 and 190 may comprise a first protective tape 190 attached over one surface of the core-side negative electrode non-coating portion 125 and an end of one surface of the core-side negative electrode active material portions 122 and 123 and a second protective tape 180 attached over the other surface of the core-side negative electrode non-coated portion 125 and an end of the other surface of the core-side negative electrode active material portions 122 and 123.

The first protective tape 190 may comprise a first portion 191 attached to one surface of the core-side negative electrode non-coating portion 125 and a second portion 192 attached to an end of one surface of the core-side negative electrode active material portions 122 and 123. In this case, a length L1 of the first protective tape 190 may be greater than a length a1 of one surface of the core-side negative electrode non-coating portion 125.

Here, in the first protective tape 190, the first portion 191 may be, for example, attached to the core-side negative electrode non-coating portion 125 except for the end. In this case, the first protective tape 190 may be attached from, for example, a section spaced 6 mm from the end of the core-side negative electrode non-coating portion 125, but the present invention is not limited thereto.

In the first protective tape 190, the first portion 191 may be, for another example, attached over an entire other surface of the core-side negative electrode non-coating portion 125.

The second protective tape 180 may comprise a first portion 181 attached to the other surface of the core-side negative electrode non-coating portion 125 and a second portion 182 attached to an end of the other surface of the core-side negative electrode active material portions 122 and 123. In this case, a length of the second protective tape 180 may be greater than a length of the other surface of the core-side negative electrode non-coating portion 125.

Here, in the second protective tape 180, the first portion 181 may be, for example, attached to the core-side negative electrode non-coating portion 125 except for the end. In the second protective tape 180, the first portion 181 may be, for another example, attached over an entire other surface of the core-side negative electrode non-coating portion 125.

The second portion 192 of the first protective tape 190 and the second portion 182 of the second protective tape 180 may be aligned with an end of the core-side I of the positive electrode 110 in the stacking direction (a vertical direction in FIG. 2) of the electrodes 130 and the separators 140 and 150. Here, the second portion 192 of the first protective tape 190 and the second portion 182 of the second protective tape 180 may overlap the end of the core-side I of the positive electrode 110 by more than 3 mm in the stacking direction.

A length L1 of the first protective tape 190 may be, for example, 17mm to 40 mm. Here, the length L1 of the first protective tape 190 may be, for example, 30 mm to 40 mm. In this case, the length L1 of the first protective tape 190 may be more specifically, for example, 35 mm to 37 mm.

The length of the second protective tape 180 may be, for example, 17 mm to 25 mm. In this case, the protective tape 180 may be formed to be specifically, for example, to be 17 mm to 19 mm. Here, the length of the second protective tape 180 is formed to be 17 mm or more, and thus, when being wound, a portion overlapping the end of the core-side I of the positive electrode 110 in the stacking direction may be provided. Thus, when the second separator 150 is damaged by the core-side I end of the positive electrode 110, the second protective tape 180 may prevent short circuit from occurring due to the contact between the core-side I end of the positive electrode 110 and the negative electrode 120.

For example, an attachment length of the first protective tape 190 and the second protective tape 180, which are attached to the core-side negative electrode non-coating portion 125, may be 13 mm, but the present invention is not necessarily limited thereto.

The electrode assembly according to an embodiment of the present invention configured as described above may prevent the short circuit from occurring through the protective tapes 180 and 190 when the separator 160 facing by the core-side I end of the positive electrode 110 is damaged. That is, the first protective tape 190 may be disposed on a portion of one surface of the core-side negative electrode non-coating portion 125 facing the core-side I end of the positive electrode 110 with the first separator 140 interposed therebetween, and when the first separator 140 is damaged by the end of the positive electrode 110, the end of the positive electrode 110 may be in contact with the core-side negative electrode non-coating portion 125 to prevent the electrical short-circuit from occurring. Furthermore, when the electrode assembly 100 is wound, the second protective tape 180 may be disposed on a portion of the other surface of the core-side negative electrode non-coating portion 125 facing the core-side I end of the positive electrode 110 with the second separator 150 interposed therebetween, and when the second separator 150 is damaged by the end of the positive electrode 110, the end of the positive electrode 110 may be in contact with the core-side negative electrode non-coating portion 125 to prevent the electrical short-circuit from occurring.

In addition, as the protective tapes 180 and 190 are attached to the core-side negative electrode non-coating portion 125, it is possible to prevent core collapsing at the core side from occurring, thereby preventing the battery lifespan from being deteriorated.

### Electrode assembly according to another embodiment

Hereinafter, an electrode assembly 200 according to another embodiment will be described.

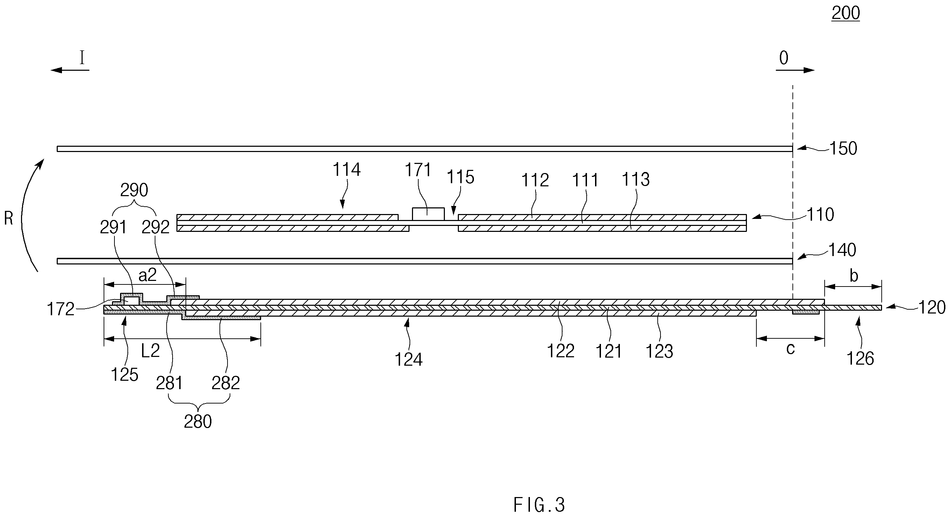

FIG. 3 is a front view illustrating an unfolded state before an electrode assembly is wound according to another embodiment of the present invention.

Referring to FIG. 3, the electrode assembly 200 according to another embodiment of the present invention is a winding-type electrode assembly and comprises a positive electrode 110 comprising positive electrode active material portions 112 and 113 and a positive electrode non-coating portion 115, a positive electrode tab 171 provided on the positive electrode non-coating portion 115, a negative electrode 120 comprising negative electrode active material portions 122 and 123 and negative electrode non-coating portions 125 and 126, a negative electrode tab 172 provided on each of the negative electrode non-coating portions 125 and 126, and a separator 160 insulating the positive electrode 110 from the negative electrode 120.

The electrode assembly 200 according to another embodiment of the present invention is different from the electrode assembly according to the foregoing embodiment described in embodiment of protective tapes 280 and 290. Thus, contents of this embodiment, which are duplicated with those according to the forgoing embodiment, will be omitted or briefly described, and also, differences therebetween will be mainly described.

In more detail, an electrode assembly 100 has a structure in which electrodes 130 and a separator 160 are assembled and alternately stacked. Here, the electrode assembly 100 may be formed in a shape in which the electrodes 130 and the separators 160 are alternately combined to be wound. Here, the electrode assembly 100 may be wound in a cylindrical shape wound around a central axis C.

The electrodes 130 may comprise a positive electrode 110 and a negative electrode 120. Also, the separator 160 separates and electrically insulates the positive electrode 110 and the negative electrode 120 from each other.

The positive electrode 110 may comprise a positive electrode collector 111, positive electrode active material portions 112 and 113 that are areas on which a positive electrode active material 114 is stacked on the positive electrode collector 111, and a positive electrode non-coating portion 115 that are areas on which the positive electrode active material is not stacked.

The positive electrode collector 111 may be provided as, for example, foil made of an aluminum material.

The positive electrode non-coating portion 115 may be disposed between both sides of the positive electrode 110.

The negative electrode 120 may comprise a negative electrode collector 121, negative electrode active material portions 122 and 123 that are areas, on which a negative electrode active material 124 is stacked on the negative electrode collector 121, and negative electrode non-coating portions 125 and 126 that are areas on which the negative electrode active material is not stacked.

For example, the negative electrode collector 121 may be foil made of a copper (Cu) or nickel (Ni) material.

The negative active electrode material portions 122 and 123 may be provided on both surfaces of the negative electrode collector 121, respectively. Here, a length of the negative electrode active material portion 122 provided in the negative electrode collector 121, which is a side of the positive electrode 110, may be greater than that of each of the positive electrode active material portions 112 and 113.

The negative electrode non-coating portions 125 and 126 may comprise the core-side negative electrode non-coating portion 125 of the negative electrode 120 disposed at a core when the positive electrode 110, the negative electrode 120, and the separator 160 are wound.

The core-side negative electrode non-coating portion 125 may be disposed at one side of the negative electrode 120.

Here, the negative electrode 120, the first separator 140, the positive electrode 110, and the second separator 150 may be wound from one side in a clockwise direction in which the winding starts.

The negative electrode 120 may be formed to have a length longer than that of the positive electrode 110.

The separator 160 may be made of an insulating material to insulate the positive electrode 110 and the negative electrode 120 from each other.

Also, the separator 160 may comprise a first separator 140 and a second separator 150.

Here, the negative electrode 120, the first separator 140, the positive electrode 110, and the second separator 150 may be sequentially stacked from the outermost winding portion.

Each of the first separator 140 and the second separator 150 may be formed to be longer than each of the positive electrode 110 and the negative electrode 120.

An electrode tab 170 is attached to the electrode 130 and is electrically connected to the electrode 130.

The electrode tab 170 may comprise a positive electrode tab 171 attached to the positive electrode 110 and a negative electrode tab 172 attached to the negative electrode 120.

The positive electrode tab 171 may be provided on the positive electrode non-coating portion 115 and may be disposed on one surface in the direction that is directed from the positive electrode 110 to the second separator 150.

The negative electrode tab 172 may be provided on the negative electrode non-coating portions 125 and 126 and may be disposed on one surface of both surfaces of the core-side negative electrode non-coating portion 125, which is a side of the positive electrode 110.

The electrode assembly according to an embodiment of the present invention may further comprise protective tapes 280 and 290 attached to the core-side negative electrode non-coating portion 125.

The protective tapes 280 and 290 may be attached over the core-side negative electrode non-coating portion 125 and an end of the core-side negative electrode active material portions 122 and 123.

The protective tapes 280 and 290 may comprise a first protective tape 290 attached over one surface of the core-side negative electrode non-coating portion 125 and an end of one surface of the core-side negative electrode active material portions 122 and 123 and a second protective tape 280 attached over the other surface of the core-side negative electrode non-coated portion 125 and an end of the other surface of the core-side negative electrode active material portions 122 and 123.

The first protective tape 290 may comprise a first portion 191 attached to one surface of the core-side negative electrode non-coating portion 125 and a second portion 192 attached to an end of one surface of the core-side negative electrode active material portions 122 and 123. In this case, a length of the first protective tape 290 may be greater than a length of one surface of the core-side negative electrode non-coating portion 125.

Here, in the first protective tape 290, the first portion 191 may be, for example, attached to the core-side negative electrode non-coating portion 125 except for the end. In the first protective tape 290, the first portion 191 may be, for another example, attached over an entire other surface of the core-side negative electrode non-coating portion 125. In this case, a length L2 of the second protective tape 280 may be greater than a length of the other surface of the core-side negative electrode non-coating portion 125.

The second protective tape 280 may comprise a first portion 281 attached to the other surface of the core-side negative electrode non-coating portion 125 and a second portion 282 attached to an end of the other surface of the core-side negative electrode active material portions 122 and 123. In this case, a length a2 of the second protective tape 280 may be greater than a length of the other surface of the core-side negative electrode non-coating portion 125.

Here, in the second protective tape 280, the first portion 181 may be, for example, attached to the core-side negative electrode non-coating portion 125 except for the end. In the second protective tape 280, the first portion 281 may be, for another example, attached over an entire other surface of the core-side negative electrode non-coating portion 125.

The second portion 292 of the first protective tape 290 and the second portion 282 of the second protective tape 280 may be aligned with an end of the core-side I of the positive electrode 110 in the stacking direction (a vertical direction in FIG. 3) of the electrodes 130 and the separators 140 and 150. Here, the second portion 292 of the first protective tape 290 and the second portion 282 of the second protective tape 280 may overlap the end of the core-side I of the positive electrode 110 by more than 3 mm in the stacking direction.

The length of the first protective tape 290 may be, for example, 17 mm to 25 mm. In this case, the first protective tape 290 may be formed to be specifically, for example, to be 17 mm to 19 mm. Here, the length of the first protective tape 290 is formed to be 17 mm or more, and thus, a portion overlapping the end of the core-side I of the positive electrode 110 in the stacking direction may be provided. Thus, when the first separator 140 is damaged by the core-side I end of the positive electrode 110, the first protective tape 290 may prevent short circuit from occurring due to the contact between the core-side I end of the positive electrode 110 and the negative electrode 120.

A length L2 of the second protective tape 280 may be, for example, 30 mm to 40 mm. In this case, the length L2 of the second protective tape 280 may be specifically, for example, 35 mm to 37 mm.

Thus, the length L2 of the second protective tape 280 is formed to be 37 mm or less, and thus, movement of lithium ions between the positive electrode 110 and the negative electrode 120 is not hindered to prevent the battery performance from being deteriorated, and also prevent a diameter of the electrode assembly 200 from being excessively expanded.

Furthermore, the length L2 of the second protective tape 280 is formed to be 35 mm or more, and after winding the core side (I) portion of the negative electrode 120 twice, even if the core-side end of the positive electrode 110 and the second protection tape 280 face each other, a portion overlapping the core-side (I) end of the positive electrode 110 in a stacking direction may be present.

### Secondary battery

Hereinafter, a secondary battery according to an embodiment of the present invention will be described.

Referring to FIG. 1, a secondary battery 10 according to an embodiment of the present invention comprises an electrode assembly 100 and a battery case 20. The electrode assembly 100 is a winding-type electrode assembly in which a positive electrode 110, a separator 160, and a negative electrode 120 are alternatively stacked to be wound, and comprises a positive electrode 110 comprising a positive electrode active material portion and a positive electrode non-coating portion, a positive electrode tab 171 provided on the positive electrode non-coating portion, a negative electrode comprising a negative active material portion and a negative electrode non-coating portion, a negative electrode tab 172 provided on the negative electrode non-coating portion, and a separator 160 that insulates the positive electrode 110 from the negative electrode. Here, the negative electrode non-coating portion may comprise a core-side negative electrode non-coating portion of the negative electrode disposed at a core when the positive electrode 110, the negative electrode, and the separator 160 are wound.

The secondary battery 10 according to an embodiment of the present invention relates to a secondary battery comprising the electrode assembly according to the foregoing embodiment or the electrode assembly according to another embodiment. Thus, contents of this embodiment, which are duplicated with those according to the forgoing embodiment, will be omitted or briefly described, and also, differences therebetween will be mainly described.

A secondary battery 10 according to an embodiment of the present invention comprises an electrode assembly 100 and a battery case 20 in which the electrode assembly 100 is accommodated. Here, the secondary battery 10 according to the embodiment of the present invention may further comprise an electrolyte accommodated in the battery case 20.

The battery case 20 may have an upwardly opened accommodation part 21 in which the electrode assembly 100 is accommodated. Here, the battery case 20 may be formed in, for example, a cylindrical shape.

The secondary battery 10 according to an embodiment of the present invention may further comprise a cap 30 covering an opened accommodation part 21 of the battery case 20.

An electrode tab 170 is attached to the electrode 130 and is electrically connected to the electrode 130.

The electrode tab 170 may comprise a positive electrode tab 171 attached to the positive electrode 110 and a negative electrode tab 172 attached to the negative electrode 120.

The positive electrode tab 171 may be formed in an upward direction in which a cap 30 is disposed in FIG. 1, and the negative electrode tab 172 may be disposed in a downward direction, i.e., toward a bottom surface of an accommodation part 21 of a battery case 20. Here, the cap 30 connected to the positive electrode tab 171 may form a positive electrode terminal, and a lower portion of the battery case 20 connected to the negative electrode tab 172 may form a negative electrode terminal. Here, the cap 30 and the battery case 20 may be insulated from each other.

The negative electrode tab 172 may be disposed on one surface of the core-side negative electrode non-coating portion, which is a side of the positive electrode 110.

The secondary battery 10 according to an embodiment of the present invention may further comprise protective tapes 180 and 190 attached to the core-side negative electrode non-coating portion 125.

The protective tapes 180 and 190 may be attached over the core-side negative electrode non-coating portion 125 and an end of the core-side negative electrode active material portions 122 and 123.

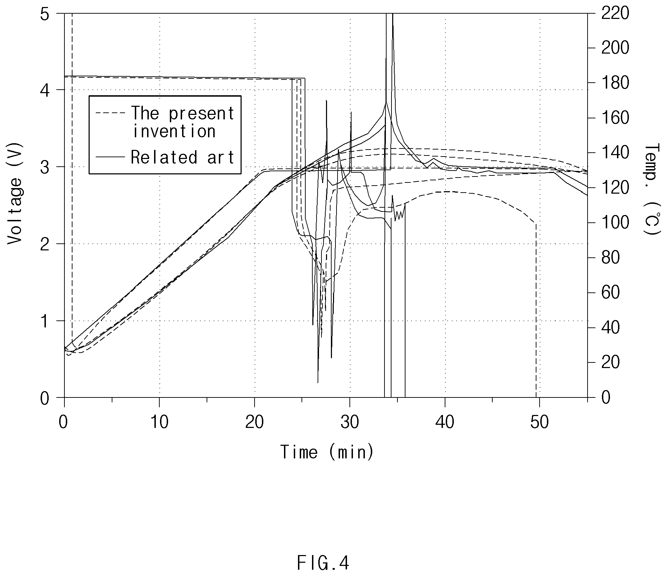

FIG. 4 is a graph illustrating results obtained by measuring ignition stability of an electrode assembly according to the related art and an embodiment of the present invention.

The graph illustrated in FIG. 4 shows ignition stability of an electrode assembly A, in which a protective tape is attached to a negative electrode core non-coating portion, according to an embodiment of the present invention and an electrode assembly B, in which a protective tape is not attached to a negative electrode core non-coating portion, according to the related art.

In addition, the graph illustrated in FIG. 4 shows results obtained by measuring ignition stability by heating a chamber to about 130°C after accommodating secondary batteries, which respectively comprise the electrode assemblies according to the present invention and the related art, in the chamber. Here, a length of a protective tape provided in the electrode assembly A according to the embodiment of the present invention is 35 mm.

As illustrated in the graph of FIG. 4, it is seen that the electrode assembly B according to the related art, to which the protective tape is not attached, is ignited when about 34 minutes elapses, whereas the electrode assembly A according to an embodiment of the present invention, to which the protective tape is attached to the negative electrode core non-coating portion, is not ignited.

As a result, it is seen that, in the electrode assembly A according to an embodiment of the present invention, the protective tape is attached to the negative electrode core non-coating portion to prevent the short circuit from occurring, thereby preventing core collapse from occurring at the core side so as to prevent the ignition.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the spirit and scope of the present invention.

Furthermore, the scope of protection of the present invention will be clarified by the appended claims.

### [Description of the Symbols]

10: Secondary battery
20: Battery case
21: Accommodation part
30: Cap
100, 200: Electrode assembly
110: Positive electrode
111: Positive electrode collector
112,113: Positive electrode active material portion
114: Positive electrode active material
115: Positive electrode non-coating portion
120: Negative electrode
121: Negative electrode collector
122,123: Negative electrode active material portion
124: Negative electrode active material
125: Core-side negative electrode non-coating portion
126: Outer negative electrode non-coating portion
130: Electrode
140: First separator
150: Second separator
160: Separator
170: Electrode tab
171: Positive electrode tab
172: Negative electrode tab
180, 280: Second protective tape
190, 290: First protective tape
181, 191, 281, 291: First portion
182, 192, 282, 292: Second portion
C: Central axis
I: Core side
O: Outer side

## Claims

1. An electrode assembly, which is provided as a winding type electrode assembly, the electrode assembly comprising:
a positive electrode comprising a positive electrode active material portion that is an area, on which a positive electrode active material is stacked, and a positive electrode non-coating portion that is an area, on which the positive electrode active material is not stacked, on a positive electrode collector;
a positive electrode tab provided on the positive electrode non-coating portion;
a negative electrode comprising a negative electrode active material portion that is an area, on which a negative electrode active material is stacked, and a negative electrode non-coating portion that is an area, on which the negative electrode active material is not stacked, on a negative electrode collector;
a negative electrode tab provided on the negative electrode non-coating portion; and
a separator configured to insulate the positive electrode from the negative electrode,
wherein the negative electrode non-coating portion comprises a core-side negative electrode non-coating portion disposed at a core when the positive electrode, the negative electrode, and the separator are wound,
the negative electrode tab is disposed on one surface, which is a side of the positive electrode, of both surfaces of the core-side negative electrode non-coating portion,
the electrode assembly further comprises a protective tape attached to the core-side negative electrode non-coating portion, and
the protective tape is attached over the core-side negative electrode non-coating portion and an end of the cores-side negative electrode active material portion.

2. The electrode assembly of claim 1, wherein the protective tape comprises:
a first protective tape attached over one surface of the core-side negative electrode non-coating portion and an end of one surface of the core-side negative electrode active material portion; and
a second protective tape attached over the other surface of the core-side negative electrode non-coating portion and an end of the other surface of the core-side negative electrode active material portion.

3. The electrode assembly of claim 2, wherein the first protective tape comprises a first portion attached to one surface of the core-side negative electrode non-coating portion and a second portion attached to an end of one surface of the core-side negative electrode active material portion, and
the first portion is attached over an entire one surface of the core-side negative electrode non-coating portion.

4. The electrode assembly of claim 2, wherein the second protective tape comprises a first portion attached to the other surface of the core-side negative electrode non-coating portion and a second portion attached to an end of the other surface of the core-side negative electrode active material portion, and
the first portion is attached over an entire surface of the other surface of the core-side negative electrode non-coating portion.

5. The electrode assembly of claim 1, wherein the separator comprises a first separator and a second separator, and
the negative electrode, the first separator, the positive electrode, and the second separator are sequentially stacked from the outermost winding portion.

6. The electrode assembly of claim 5, wherein each of the first separator and the second separator has a length greater than that of each of the positive electrode and the negative electrode, and
the negative electrode has a length greater than that of the positive electrode.

7. The electrode assembly of claim 6, wherein the core-side negative electrode non-coating portion is disposed at one side of the negative electrode, and
the negative electrode, the first separator, the positive electrode, and the second separator are wound from one side in a clockwise direction in which the winding starts.

8. The electrode assembly of claim 6, wherein the negative electrode active material portion is provided on each of both surfaces of the negative electrode collector, and
a length of the negative electrode active material portion provided on one surface of the negative electrode collector, which is a side of the positive electrode, is greater than that of the positive electrode active material portion.

9. The electrode assembly of claim 5, wherein the positive electrode non-coating portion is disposed between both sides of the positive electrode, and
the positive electrode tab is disposed on one surface of the positive electrode in a direction of the second separator.

10. A secondary battery comprising the electrode assembly of any one of claims 1 to 9.
